# EUROPEAN PATENT SPECIFICATION

(11) **EP 0 256 081 B1**
(45) Date of publication and mention of the grant of the patent: **21.04.1993**
(21) Application number: 87901099.9
(22) Date of filing: 06.02.1987
(51) Int. Cl.: G10L 5/06

(54) **IMPROVEMENTS IN OR RELATING TO ACOUSTIC RECOGNITION**
VERBESSERUNGEN ZUR SPRACHERKENNUNG
AMELIORATIONS APPORTEES A LA RECONNAISSANCE ACOUSTIQUE

(30) Priority: 06.02.1986 GB 8602915
(43) Date of publication of application: 24.02.1988
(73) Proprietor: King, Reginald Alfred, Woolstone Faringdon Oxon SN7 7QL (GB)
(72) Inventor: King, Reginald Alfred, Woolstone Faringdon Oxon SN7 7QL (GB)
(74) Representative: Lawrence, Brian Richard
(86) International application number: GB8700094
(87) International publication number: WO8704836

(56) References cited:
- ICASSP 1983 International Conference on Acoustics, Speech and Signal Processing, 14-16 April 1983, Boston (USA), vol. 2, (IEEE, New York, USA), Y. Chen : "Vocabulary Selection For High Performance Speech Recognition", pages 757-760, see paragraph IV : "Subvocabulary Selection".
- IEEE Transactions on Audio and Electro-acoustics, vol. ASSP 24, no. 6, December 1976 (New York, USA), A.D.C. Holden et al. : "A Computer Programming System Using Continuous Speech Input", pages 579-582, see page 580, left-hand column : "Selection of Basic Set of Phones".
- ASSP-23, 2/75, pp. 67-71

## Description

The present invention relates to a method of acoustic recognition and in particular to a method for improving the performance of direct voice input/automatic voice recognition systems such as voice recognition systems utilising time encoded speech.

Voice recognition systems are known. GB Patent Application No. 8323481 describes a method and system for recognising voice signals using time encoded speech. The IEEE Transactions on Communications Vol. COM-29, No 5 of May 1981 provides a fuller description of developments in this art. The article entitled "Vocabulary Selection for High Performance Speech Recognition" published in "ICASSP 83, vol. 2, pp. 757-760" discloses another voice recognition proposal.

For many voice recognition applications "templates" or "archetypes" of a complete set of words (or other acoustic events) to be identified or recognised are built up during a training phase and stored in a template or archetype store. During the recognition phase, as words are spoken into the recogniser the input utterance is compared with each member from the set of templates/archetypes in the store. Some form of "match" is computed and the closest match is identified by the machine as the word spoken.

Similar words, for example "no" and "go", "six" and "fix", may cause confusion and misrecognition. It is accepted that, in general, the larger the total set of words to be recognized, the greater the likelihood of confusion between some words in the set. It has also been observed that the numerical set of words zero to nine are very difficult to recognize with accuracy and consistency, since there is very little acoustic material for an automatic recogniser to operate upon. Some pairs of words, for example, "nine" and "five" may be consistently misrecognised. Similarly, the individual letters "b", "c", "d" and "e" may also be consistently misrecognised from the alpha set of words. This misrecognition/confusion is also characteristic of other sets of utterances, This is particularly disadvantageous, since most useful applications for direct voice input or voice recognition need to employ the ubiquitous numeric set (or the alpha-numeric set) of words. In telephone dialling, for example, or in the selection of items from a menu presented to the user, the numeric set of words is an easy and familiar vehicle for most people to use. Other acoustic tokens are not in general so readily acceptable without considerable training.

The problem described above is further compounded by the fact that different speakers pronounce the alpha-numeric set in different ways. Also, changes in speaker diction caused by stress, illness, microphone placement, background noise, etc. produce considerable variation between recognition scores for identical words spoken by the same speaker on different occasions or in different circumstances. This may result in confusion between different pairs of words in different circumstances.

It is an object of the present invention to provide a method of assigning individual members from a selected acoustic sub-set such as the numeric (or alpha-numeric) sub-set of symbols in such a way as to minimise confusion between these symbols when spoken as inputs to an automatic voice recognition system, and thus significantly to improve the performance of the system in most realistic situations.

Accordingly, there is provided a method for acoustic recognition, the method comprising, for a set of acoustic events, comparing every acoustic event of the set with itself or an archetypal description of itself and every other acoustic event of the set or an archetypal description thereof, formulating a comparison matrix of comparison scores, each comparison score being indicative of the degree of confusion between an acoustic event when compared with itself or an archetypal description thereof or another acoustic event of the set or an archetypal description thereof, and establishing from the comparison matrix a ranking order for the compared acoustic events, which ranking order is indicative of the preferred order for disregarding acoustic events from the set to provide a preferred set of acoustic events, and disregarding one or more acoustic events in accordance with the established ranking order, said method further comprising deleting from the comparison matrix those comparison scores corresponding to the comparison of the identified acoustic event with the other acoustic events of the set, summing the rows or columns of the remaining comparison scores to establish a summed value of comparison scores for each remaining row or column, identifying the remaining comparison scores indicating the greatest or least degree of remaining confusion, subtracting those identified remaining comparison scores from the summed values for the rows or columns in which these identified remaining comparison scores for each remaining row or column of the comparison matrix after this subtraction to establish total comparison scores for the remaining comparison matrix, and comparing the total comparison scores for the remaining comparison matrix to establish the identity of a further acoustic event to be disregarded from the set of acoustic events.

The method steps may be repeated to establish the ranking order for all the compared acoustic events of the set.

Preferably, any acoustic event disregarded from the set is substitued by an acoustic event of equivalent meaning to the disregarded acoustic event, but which results in less confusion.

The acoustic events, which may comprise words or phonemes, before comparison, may be encoded using time encoded speech.

The method of the present invention may be utilised in a telephone dialling system.

The present invention will now be described, by way of example, with reference to the accompanying drawings in which:
Figures 1 to 4 illustrate a matrix of comparison scores representing acoustic events from an acoustic set; and,
Figures 5 to 7 illustrate how the method of the present invention may be applied in practice to a telephone system.

In the following description, the numeric sub-set zero to nine is used as an example, and a telephone dialling system is used as the vehicle for illustration. However, it will be realised that any other acceptable acoustic set in any language may advantageously be treated in the same way, for this or for other similar applications. It is also assumed in the following examples that the system utilized has been trained on the set of words zero to nine, and that the system contains a template/archetype or other reference model for each word zero to nine.

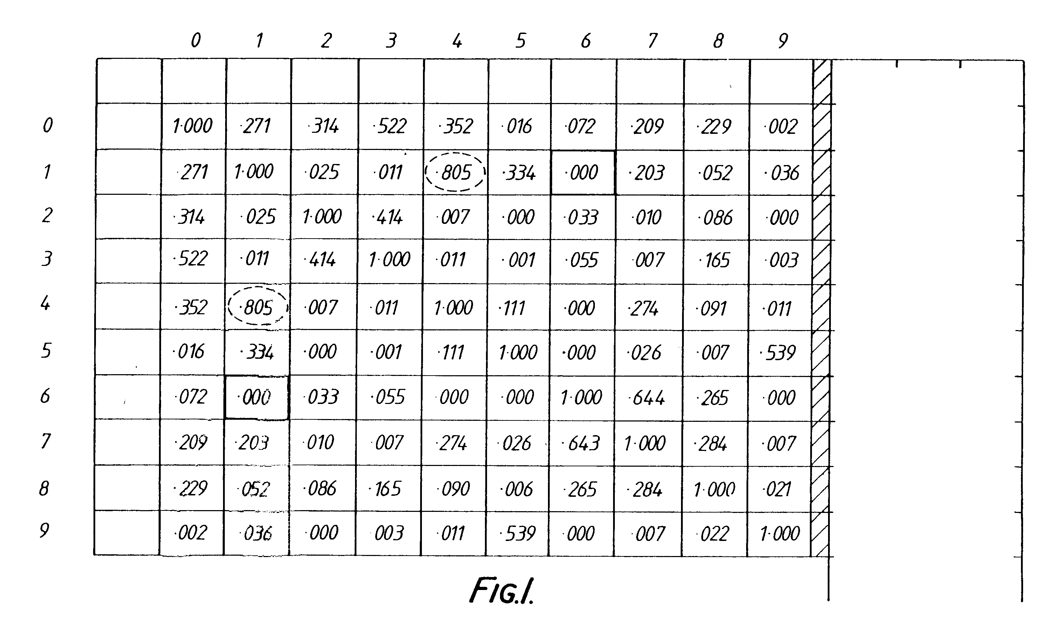

Referring to the drawings, each of the templates/archetypes is compared and scored against itself, and against each of the other templates/archetypes in the template/archetype store. The results of these comparisons, that is to say the comparison scores, are recorded in a Comparison Matrix (CM), an example of which is shown in Figure 1.

In this example, it will be seen that templates/archetypes of the words compared against themselves give a 1 (100%) comparison score and that throughout the matrix, comparison scores vary from very low values, such as zero between for example the words one and six (indicating little similarity or no similarity between the archetyes of these words), to higher values such as 0.805 (80.5%) between the words one and four (indicating 80.5% similarity between the archetypes of these two words). The high degree of similarity between archetypes of these words indicates that considerable confusion may arise between the words one and four during any recognition process with this system and under these conditions.

An examination of the values in the Comparison Matrix shown in Figure 1 reveals a comparison score of 0.805 for the words one and four, 0.644 for the words six and seven, 0.539 for the words five and nine, 0.522 for the words zero and three; and so on. It will be appreciated that, alternatively, this examination could also proceed from the lowest comparison score upwards, rather than from the highest downwards.

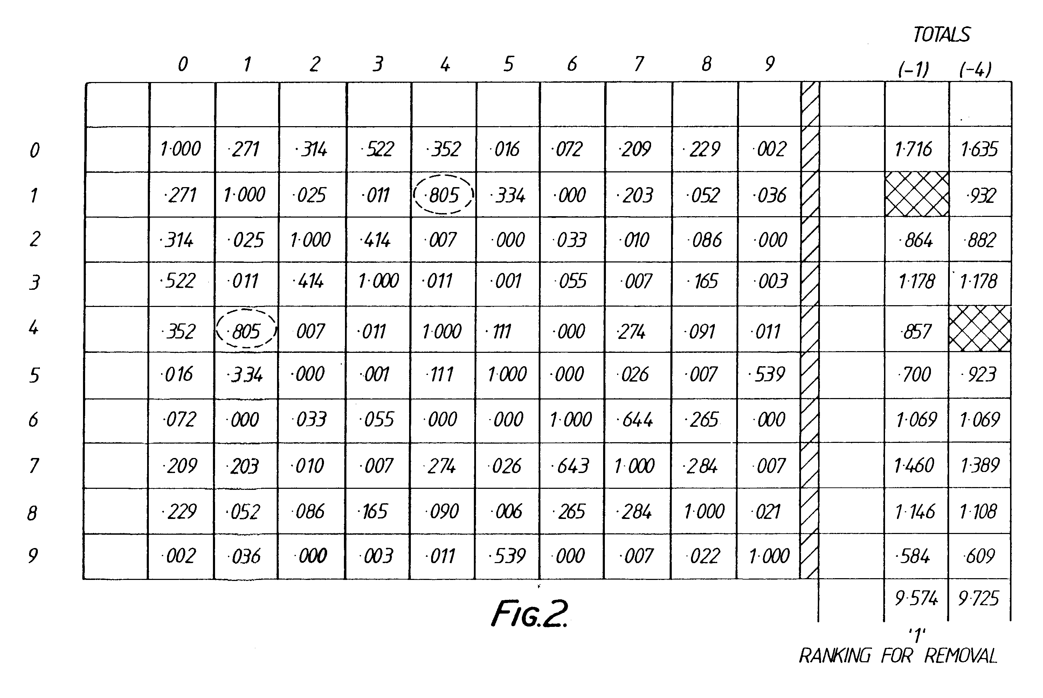

From this information it may be deduced that the exclusion of the words "one" and "four" from the NUMERIC sub-set would remove the major source of confusion from the sub-set and make the remaining numbers easier for the machine to recognise. According to the present invention, the comparison score indicating the highest degree of confusion between any two numbers in the sub-set is noted and the numbers responsible for this score identified. Total comparison scores for the numbers concerned are recorded (row totals), less 100% entries that is, the entries arising from the comparison of numbers with themselves. Total comparison scores for each row of the matrix are then summed, excluding successively the scores of those events responsible for the highest confusion. In the current example, as shown in Diagram 2, the comparison scores of the whole matrix would be summed row by row excluding the comparison scores generated by comparing the word "one" with the other words in the numeric sub-set (the "one" scores), and recorded. These sums are shown by the column designated (-1) in Figure 2. Likewise, the comparison scores of the whole matrix, excluding the "four" scores would be summed and recorded as shown by the column designated (-4) in Figure 2. The utterance giving the lowest sum when excluded, would then be labelled for removal first from the utterance to be used.

In the example shown, it can be seen that removing "one" from the comparison matrix results in a total confusion of 9.574, removing "four" results in a confusion of 9.725. Therefore, to advantage, the word "one" should be the first utterance considered for removal from the numeric subset.

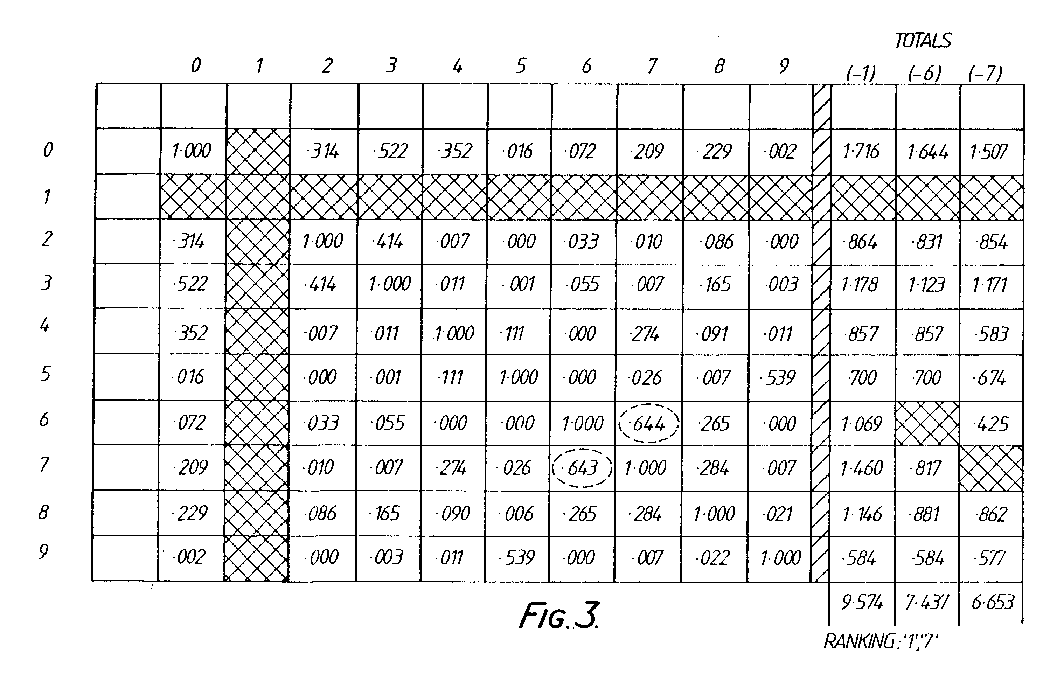

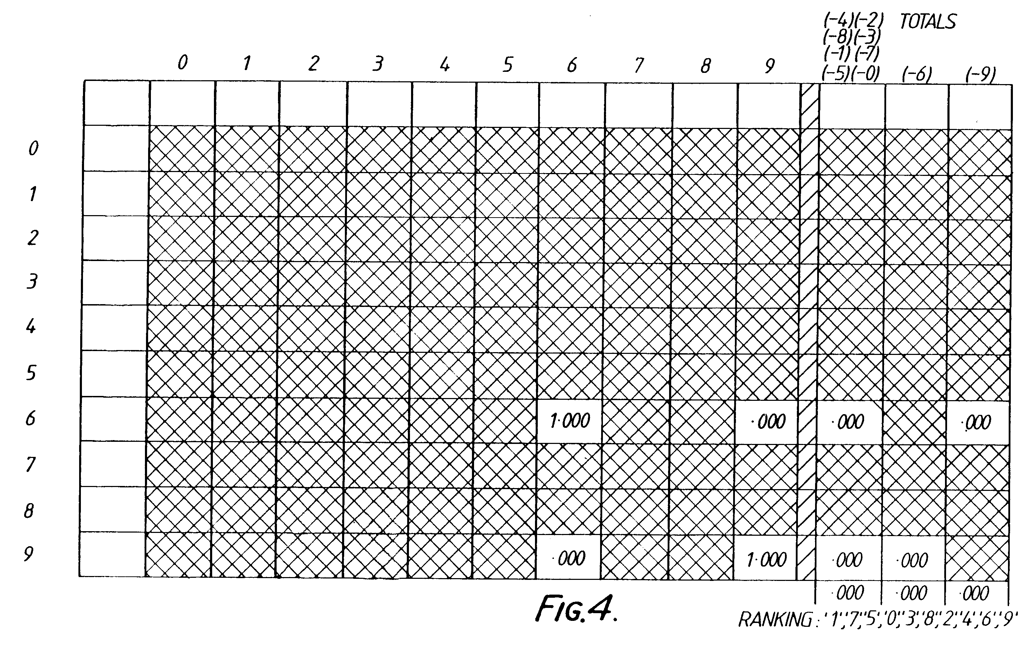

The confusion matrix is then re-examined with all "one" entries expunged (see Figure 3) and then process is repeated until a ranking ordering for all the utterances in the numeric subset is produced; Figure 4 showing the last utterance for removal from the set. In the example shown by the matrix of Figure 1, the complete ordering would be 1, 7, 5, 0, 3, 8, 2, 4, 6, 9.

The ranking order obtained by this method will of course vary from speaker to speaker, system to system, day to day etc., and will be computed and available whenever is required, for example during the training or retraining phase of the recogniser. It may be computed as a result of procedural imperative, or it may be initiated by the user if for example the noise in the room changes, the user has a cold, a tooth removed, is forced to wear a face mask or respirator, etc, etc.

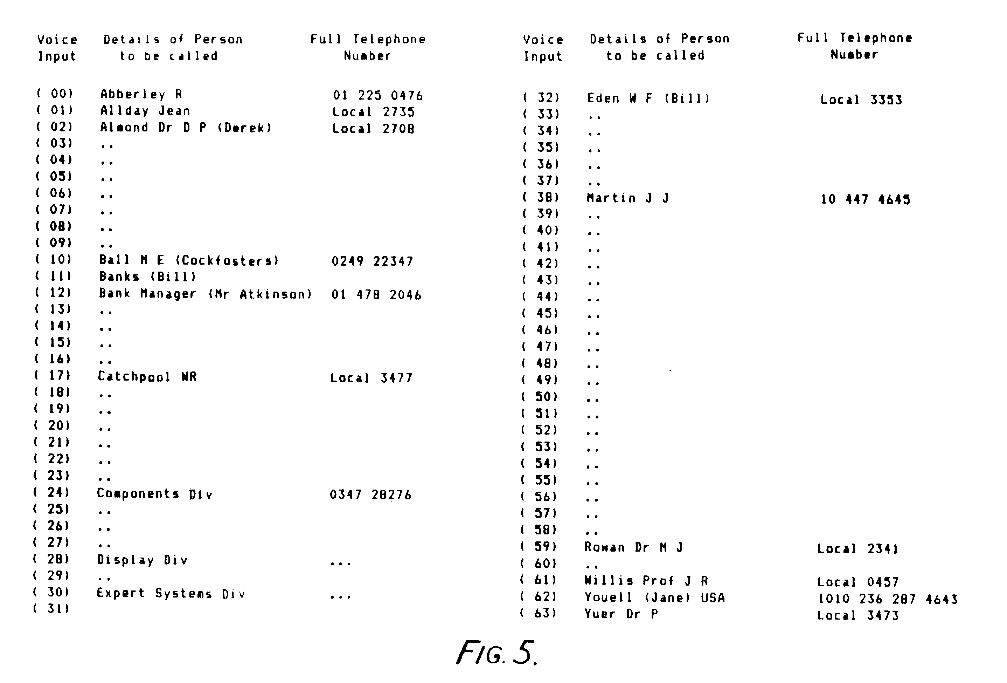

Having established those utterances which are likely to produce most confusion in decreasing order, then this information is applied to the application under consideration. In the example illustrated in Figures 5 to 7, a telephone dialling system is used but many other applications commend themselves to this method.

In the telephone dialling system under consideration, three modes of operation are postulated:
(a) pre-stored number facility;
(b) free-dialling facility;
(c) listed number facility.

In the "pre-stored number" facility the name or location of the destination is pre-stored, and speaking the name or location to the automatic recogniser will cause the number to be dialled. This facility would be reserved for, say, the 10 most frequent numbers used by the subscriber.

In the "free dialling mode" the individual numbers would be input by the user to form the telephone number for dialling. This facility would be reserved for the most infrequent numbers used by the subscriber, since it is time-consuming and more prone to error.

In the "listed number" facility, a list of common telephone numbers used frequently by the subscriber may be displayed on a screen and labelled with a two or three-digit number prefix to indicate the acoustic input required to identify the number or person to be dialled, as shown in Figure 5.

In most applications, forty to sixty numbers per page of the list will be sufficient to provide an effective grade of service. According to the present invention, the total number of entries on the list is recorded and each entry is assigned a "D" digit number to the smallest base "N", where N is less than or equal to ten. (In the example given, D = 2 or 3.)

It can be seen that for a 64 entry list, under normal circumstances, and with a full numeric set, all the digits zero to nine will be used in pairs for each entry, and, in the example given, maximum confusion will occur between utterances 1, 4, 6, 7, etc., etc., as illustrated in Figure 1.

If it is desirable to restrict the digit prefix per list entry to two, then the smallest possible base for the 64 entry list is "8" and two digits from a base 8 set of acoustic events will provide a unique description for each entry on the list.

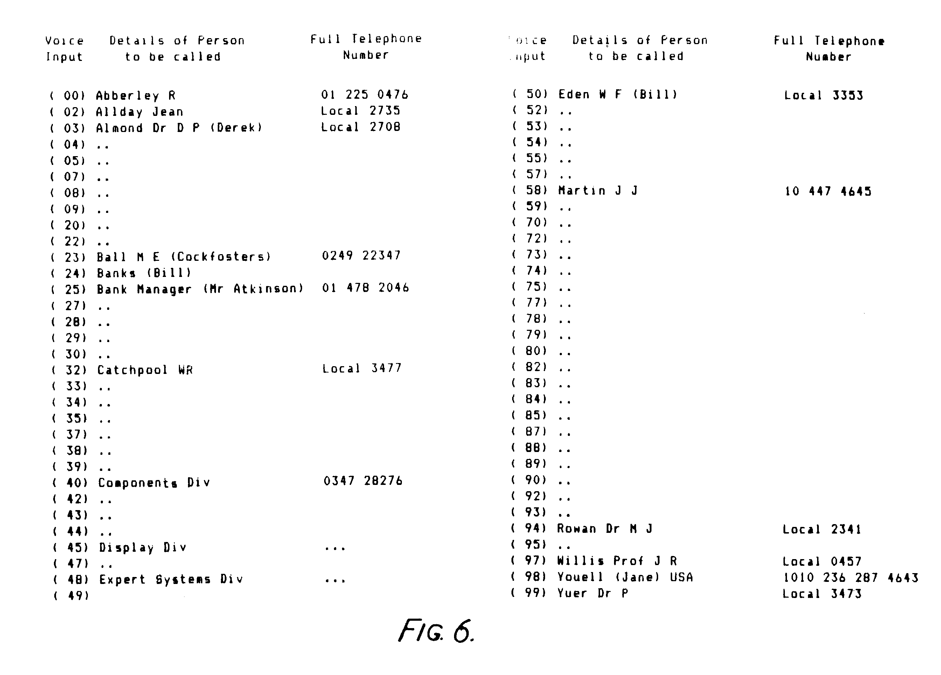

From the ordering obtained by examination of the confusion matrix, it can be seen that the exclusion of the numbers one and six will result in a ("minimum confusion") base 8 set of numbers, viz: 0, 2, 3, 4, 5, 7, 8, 9. These minimum confusion set of numbers may then be assigned in order to the 64 entries in the list as shown in Figure 6. Such an allocation will minimise confusion and significantly improve the performance of the voice recognition system.

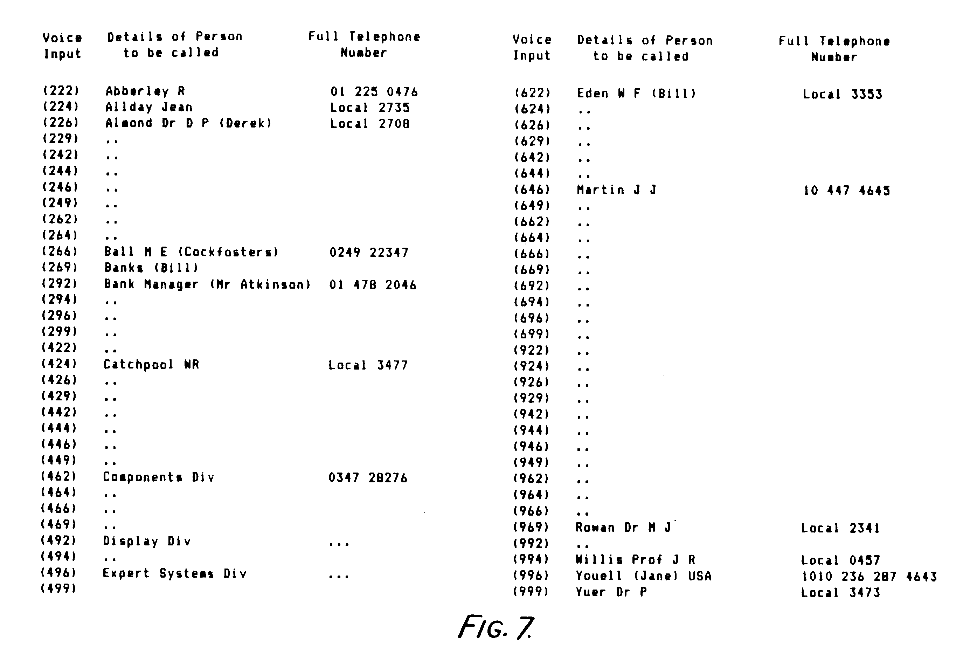

It will be appreciated that if a three digit prefix for each entry on the list is acceptable, then base 4 descriptors may be used. Under these circumstances, four only symbols from the set zero to nine, may be assigned to the individual members of the list resulting in the least possible confusion via the base 4 set of numbers 2, 4, 6, 9, as shown in Figure 7.

In practice, some allowance for list expansion may be included and, for a 3 digit prefix, a base 5 descriptor would probably be specified for a list of up to 64 entries in case the list is subsequently expanded to up to 125 entries.

By this method, whatever the features or characteristics of the recognition system, the acoustic environment or the variability of the individual user, the system is optimised to produce maximum recognition performance of the available acoustic set irrespective of the speaker or system or environmental or other variations.

It will be appreciated that the comparison matrix described is merely one of many which may be deployed, dependent upon the characteristics of the recognition system architecture. If, for instance, sets of individual tokens are stored to form the template/archetype for each of the words in the token set to be recognised, then the scores entered in the comparison matrix may be the "maximum" from the token set or the mean of the scores from the token set, and may include the spread or variation of individual scores, and any or all of these may be updated during use if necessary. All that is required is a meaningful comparison score relative to the recognition system architecture into which the present method is incorporated, which will permit the successive exclusion of those utterances causing maximum confusion in the total set of utterances being used.

It will also be appreciated that by these means a recognition system can be given a capability of adapting to background noise conditions. In the example of the listed number facility if the background noise is polled by the system and found to be greater than a specified level, the "D" parameter which defines the number of digits in the prefix, can be made larger, so that fewer individual utterances or acoustic events may be used in the feature set.

In other applications the vocabulary may be automatically restricted or expanded to respond to the background noise conditions.

The comparison matrix and comparison scores together with resulting comparison steps, may be generated and stored in any form of apparatus suitable for this purpose, such as an appropriately programmed computer.

It should also be appreciated that other criteria may be employed to establish the ranking order for removal of utterances from the sub set whilst remaining within the scope of the invention. For example, at any stage in establishing the ranking order for removal, the pair of utterances giving rise to the highest degree of confusion may be recognised, as described with respect to Figures 1 to 4. However, even though one of this pair may give rise to the lowest sum of comparison scores when excluded from the sub set it may be realised that the other utterance of the pair also has a relatively high degree of confusion with one or more other utterances and hence may be chosen for removal even though a slightly higher sum of comparison scores would remain.

## Claims

1. A method for acoustic recognition, the method comprising, for a set of acoustic events, comparing every acoustic event of the set with itself or an archetypal description thereof and every other acoustic event of the set or an archetypal description thereof, formulating a comparison matrix of comparison scores, each comparison score being indicative of the degree of confusion between an acoustic event when compared with itself or an archetypal description thereof or another acoustic event of the set or an archetypal description thereof, and establishing from the comparison matrix a ranking order for the compared acoustic events, which ranking order is indicative of the preferred order for disregarding acoustic events from the set to provide a preferred set of acoustic events, and disregarding one or more acoustic events in accordance with the established ranking order, said method further comprising deleting from the comparison matrix those comparison scores corresponding to the comparison of the identified acoustic event with the other acoustic events of the set, summing the rows or columns of the remaining comparison scores to establish a summed value of comparison scores for each remaining row or column, identifying the remaining comparison scores indicating the greatest or least degree of remaining confusion, subtracting these identified remaining comparison scores from the summed values for the rows or columns in which these identified remaining comparison scores occur, summing the summed values of comparison scores for each remaining row or column of the comparison matrix after this subtraction to establish total comparison scores for the remaining comparison matrix thereby to establish the identity of a further acoustic event to be disregarded from the set of acoustic events.

2. A method according to claim 1, comprising repeating the method to establish the ranking order for all of the compared acoustic events of the set.

3. A method according to any preceding claim, wherein any acoustic event disregarded from the set is substituted by an acoustic event of equivalent meaning to the disregarding acoustic event.

4. A method according to any one of the preceding claims, wherein the acoustic events comprise words.

5. A method according to any of the preceding claims, wherein the acoustic events comprise phonemes.

6. A method according to any of the preceding claims, wherein the acoustic events before comparison, are encoded using the time encoded speech (TES).

## Patentansprüche

1. Verfahren zum Erkennen akustischer Reize, bei dem für einen Satz akustischer Ereignisse jedes akustische Ereignis dieses Satzes mit sich selbst oder einem das Ereignis beschreibenden Prototyp und mit jedem anderen akustischen Ereignis des Satzes oder dessen Prototyp verglichen wird, worauf eine Vergleichsmatrix aus Vergleichswerten aufgestellt wird, wobei ein jeder Vergleichswert den Verwechslungsgrad eines akustischen Ereignisses beim Vergleich mit sich selbst oder seinem Prototyp oder mit einem anderen akustischen Ereignis aus dem Satz oder dessen Prototyp angibt, und aus der Vergleichsmatrix eine Rangordnung für die miteinander verglichenen akustischen Ereignisse abgeleitet wird, die die bevorzugte Reihenfolge beim Ausscheiden akustischer Ereignisse aus dem Satz, um einen bevorzugten Satz akustischer Ereignisse zu schaffen, angibt, und schließlich ein oder mehrere akustische Ereignisse gemäß der abgeleiteten Rangordnung ausgeschieden werden, wobei bei dem Verfahren darüberhinaus diejenigen Vergleichswerte aus der Vergleichsmatrix entfernt werden, die sich aus dem Vergleich des identifizierten akustischen Ereignisses mit den anderen akustischen Ereignissen des Satzes ergeben, worauf die die restlichen Vergleichswerte enthaltenden Zeilen oder Spalten zur Bildung eines Summenwertes der Vergleichswerte für jede der verbleibenden Zeilen oder Spalten aufsummiert werden, dann die restlichen Vergleichswerte, die den höchsten oder niedrigsten verbleibenden Verwechslungsgrad angeben, bestimmt werden, danach die identifizierten restlichen Vergleichswerte von den Summenwerten für die Zeilen oder Spalten, in denen diese identifizierten restlichen Vergleichswerte auftreten, subtrahiert werden, und schließlich nach der Subtraktion die Summenwerte der Vergleichswerte für jede der verbleibenden Zeilen oder Spalten der Vergleichsmatrix zur Bildung von Gesamtvergleichswerten für die verbleibende Vergleichsmatrix summiert werden, wodurch die Identität eines weiteren akustischen Ereignisses, das aus dem Satz akustischer Ereignisse ausgeschieden werden soll, ermittelt wird.

2. Verfahren nach Anspruch 1, wobei das Verfahren zur Bildung einer für alle miteinander verglichenen akustischen Ereignisse geltenden Rangordnung wiederholt wird.

3. Verfahren nach einem der vorangehenden Ansprüche, bei dem jedes der aus dem Satz ausgeschiedenen akustischen Ereignisse durch ein akustisches Ereignis mit derselben Bedeutung wie das ausgeschiedene akustische Ereignis ersetzt wird.

4. Verfahren nach einem der vorangehenden Ansprüche, bei dem die akustischen Ereignisse Wörter umfassen.

5. Verfahren nach einem der vorangehenden Ansprüche, bei dem die akustischen Ereignisse Phoneme umfassen.

6. Verfahren nach einem der vorangehenden Ansprüche, bei dem die akustischen Ereignisse vor dem Vergleich mittels zeitcodierter Sprache (TES) codiert werden.

## Revendications

1. Procédé de reconnaissance acoustique, le procédé comprenant, pour un ensemble d'événements acoustiques, la comparaison de chaque événement acoustique de l'ensemble à lui-même ou à une description d'archétype de lui-même et à chaque autre événement acoustique de l'ensemble ou à une description d'archétype de celui-ci, la formulation d'une matrice de comparaison à partir de scores de comparaison, chaque score de comparaison étant représentatif du degré de confusion entre un événement acoustique, lorsqu'il est comparé à lui-même ou à une description d'archétype de lui-même ou à un autre événement acoustique de l'ensemble ou à une description d'archétype d'un tel événement, et l'établissement, à partir de la matrice de comparaison, d'un ordre de classement des événements acoustiques comparés, l'ordre de classement étant représentatif de l'ordre préféré pour que les événements acoustiques de l'ensemble soient négligés pour la formation d'un ensemble préféré d'événements acoustiques et pour qu'un ou plusieurs événements acoustiques soient négligés en fonction de l'ordre établi de classement, le procédé comprenant en outre la suppression, de la matrice de comparaison, des scores de comparaison qui correspondent à la comparaison de l'événement acoustique identifié aux autres événements acoustiques de l'ensemble, la sommation des lignes ou des colonnes des scores restants de comparaison pour l'établissement d'une valeur additionnée des scores de comparaison pour chaque ligne ou colonne restante, l'identification des scores restants de comparaison indiquant le degré le plus grand ou le plus petit de confusion restante, la soustraction de ces scores restants de comparaison identifiés des valeurs additionnées pour les lignes ou les colonnes dans lesquelles existent ces scores restants identifiés de comparaison, et la sommation des valeurs additionnées des scores de comparaison pour chaque ligne ou colonne restante de la matrice de comparaison après cette soustraction pour l'établissement de scores totaux de comparaison pour la matrice restante de comparaison, si bien que l'identité d'un événement acoustique supplémentaire qui doit être négligé dans l'ensemble des événements acoustiques est établie.

2. Procédé selon la revendication 1, comprenant la répétition de la mise en oeuvre du procédé pour l'établissement de l'ordre de classement de tous les événements acoustiques comparés dans l'ensemble.

3. Procédé selon l'une quelconque des revendications précédentes, dans lequel tout événement acoustique négligé dans l'ensemble est remplacé par un événement acoustique de signification équivalente de celle de l'événement acoustique négligé.

4. Procédé selon l'une quelconque des revendications précédentes, dans lequel les événements acoustiques sont des mots.

5. Procédé selon l'une quelconque des revendications précédentes, dans lequel les événements acoustiques sont des phonèmes.

6. Procédé selon l'une quelconque des revendications précédentes, dans lequel les événements acoustiques, avant comparaison, sont codés à l'aide de la parole codée temporellement (TES).
